# EUROPÄISCHE PATENTSCHRIFT

(11) **EP 2 423 045 B1**
(45) Veröffentlichungstag und Bekanntmachung des Hinweises auf die Patenterteilung: **05.10.2016**
(21) Anmeldenummer: 11178732.1
(22) Anmeldetag: 24.08.2011
(51) Int. Cl.: B60N 2/68

(54) **Sitzbank für Fahrzeuge**
Seating bench for vehicles
Banquette pour véhicules

(30) Priorität: 26.08.2010 DE 202010008374 U
(43) Veröffentlichungstag der Anmeldung: 29.02.2012
(73) Patentinhaber: REIMO Reisemobil-Center GmbH, 63329 Egelsbach (DE)
(72) Erfinder: Hoffmann, Ralf, 64293 Darmstadt (DE)
(74) Vertreter: Katscher Habermann Patentanwälte

(56) Entgegenhaltungen:
- WO-A1-2006/075413
- US-A1- 2009 184 562

## Beschreibung

Die Erfindung betrifft eine Sitzbank für Fahrzeuge, insbesondere für Wohnmobile, mit einer Sitzfläche und einer Rückenlehne, wobei die Sitzbank einen Sitzbankrahmen aufweist, an dem die Rückenlehne befestigbar ist und wobei der Sitzbankrahmen mindestens zwei im Wesentlichen parallel angeordnete Querholme aufweist.

Sitzbänke zum Einbau in Fahrzeugen bestehen üblicherweise aus einem rechteckigen Metallrahmen, der aus vier miteinander verschweißten Holmen aufgebaut ist. Der Querschnitt dieser Holme kann zum Beispiel quadratisch oder rechteckig sein. In dem Metallrahmen kann beispielsweise ein Maschendraht angeordnet werden, auf dem eine Sitzbankpolsterung angebracht werden kann. Eine Polsterung muss aus Stabilitätsgründen üblicherweise durch einen ausreichend steifen Unterbau gestützt werden.

Zur Befestigung der Rückenlehne an dem Sitzbankrahmen wird üblicherweise je ein weiterer Metallrahmen oder Bügel an die Längsseiten des Sitzbankrahmens geschweißt. An diesen im Wesentlichen senkrecht angeordneten Metallrahmen wird die Rückenlehne befestigt.

Sitzbänke für Fahrzeuge sollen einen möglichst großen Komfort für die Passagiere bieten. Dazu ist es unter Anderem notwendig, die Sitzbank in einem Abstand zum Fahrzeugboden anzuordnen, der zum Einen eine angenehme Sitzhöhe ermöglicht und zum Anderen die notwendige Kopffreiheit gewährleistet. Neben der Sitzbankhöhe spielt die Sitzbankbreite eine wichtige Rolle für den Komfort. Daher sollte bei der Ausgestaltung einer Sitzbank eine gewisse Breite nicht unterschritten werden.

Die Breite von Sitzbänken, die beispielweise für den Umbau von Kleintransportern zu Wohnmobilen angeboten werden, ist häufig nicht durch die Fahrzeugbreite sondern durch den Abstand der Radkästen voneinander bestimmt oder wird durch andere Fahrzeugeinbauten beschränkt. Da aus Komfortgründen eine gewisse Sitzbankhöhe eingehalten werden muss, muss die Sitzbankbreite an diesen Abstand angepasst werden. In vielen Fällen kann dies dazu führen, dass lediglich eine reduzierte Sitzbreite zur Verfügung steht und ein komfortables Sitzen für mehrere Personen auf der Sitzbank nicht möglich ist.

Eine gattungsgemäße Sitzbank ist aus dem Dokument WO 2006/075413 A1 bekannt.

Aufgabe der Erfindung ist es demzufolge, eine Sitzbank für Fahrzeuge so auszugestalten, dass der zur Verfügung stehende Raum trotz beschränkender Radkästen oder sonstiger Fahrzeugeinbauten gut ausgenutzt werden kann, die Sitzbank mit geringerem Aufwand herstellbar ist und eine hohe Stabilität der Sitzbank gewährleistet ist.

Diese Aufgabe wird erfindungsgemäß durch die Merkmale des Anspruchs 1 gelöst. Die Metallplatten sind nur wenige Millimeter stark und können beispielsweise an einer Oberseite der Querholme befestigt werden. Die Querholme können dann bis an die begrenzenden Fahrzeugeinbauten herangeführt werden. Da die Metallplatte einen wesentlich geringeren Durchmesser aufweist als die Querholme kann die Metallplatte seitlich über die Querholme hinausragen und dabei einen Radkasten oder einen anderen Fahrzeugeinbau überdecken. Dadurch wird der polsterbare Sitzbankrahmen verbreitert und die nutzbare Sitzfläche vergrößert.

Um den Herstellungsaufwand der Sitzbank weiter zu reduzieren ist vorgesehen, dass die Metallplatte mindestens einmal in Längsrichtung abgekantet ist. Die Metallplatte verläuft in dem Bereich, in dem die Querholme an der Metallplatte befestigt werden, im Wesentlichen waagerecht und in einem Abstand zu den Querholmen im Wesentlichen senkrecht zum Fahrzeugdach hin. An den so gebildeten L-förmigen Metallplatten kann die Rückenlehne ohne einen zusätzlichen Rahmen oder Bügel befestigt werden. Das notwendige Bohren und Abkanten der Metallplatten erfordert einen wesentlich geringeren Herstellungsaufwand als das Schneiden der Holme und Schweißen der Rückenlehnenträgerrahmen. Da die Längsverbindung der Querholme und der Träger der Rückenlehne aus einem einzigen Stück gefertigt werden, ist auch eine hohe Stabilität der Konstruktion gewährleistet.

Der notwendige Abstand der Metallplatte zu den Einbauten oder der Radkästen kann erhöht werden, indem die Metallplatte zwischen einem waagerecht und einem senkrecht angeordneten Bereich schräg verläuft. Im Randbereich der Sitzfläche ist ein geringerer Durchmesser der Polsterung ausreichend, um ein komfortables Sitzen zu ermöglichen. Daher kann die Metallplatte schräg vom Fahrzeugboden weg geführt werden, wodurch der Abstand zum Fahrzeugboden vergrößert wird. Dadurch können auch höhere Fahrzeugeinbauten von dem Sitzbankrahmen überdeckt werden. Es ist hierdurch aber auch möglich, die Metallplatte nicht in einem oberen Bereich der Querholme anzubringen. Beispielsweise können an dem waagerecht angeordnetem Bereich der Metallplatten Zungen ausgeformt sein, die in die Querholme eingreifen und dort beispielsweise mit den Querholmen verschweißt oder verschraubt werden. Es ist aber auch denkbar die Metallplatten auf der Unterseite der Querholme an den Querholmen festzulegen.

Die Stabilität der Verbindung zwischen der Metallplatte und den Querholmen kann weiter verstärkt werden, indem der Querholmendbereich abgeschrägt ist. Die Querholme besitzen eine zum Fahrzeugdach gerichtete Querholmoberseite und eine zum Fahrzeugboden gerichtete Querholmunterseite. Wird der Querholmendbereich nun so abgeschrägt, dass die Querholmoberseite länger als die Querholmunterseite ist und der waagerechte Bereich der Metallplatte an der Querholmunterseite beziehungsweise zwischen der Querholmunterseite und der Querholmoberseite angeordnet, kann der schräge Bereich der Metallplatte an der gesamten beziehungsweise an einem Teil der Abschlussfläche der Querholme angelegt werden. Zu diesem Zweck ist es beispielsweise möglich, die Metallplatten an den Unterseiten der Querholmunterseiten anzubringen. Es ist aber auch denkbar die Metallplatte innerhalb des Querholmendbereichs anzubringen. Dazu können Aufnahmeschlitze zur Aufnahme der Querholmendbereiche in den Metallplatten vorgesehen sein. Es können aber auch Aufnahmeschlitze zur Aufnahme der Metallplatten in den Querholmendbereichen vorgesehen sein. Es ist auch denkbar, dass an den Metallplatten Metallplattenzungen ausgeformt sind, die in die Querholmendbereiche eingebracht werden. Werden die Metallplatten an den Oberseiten der Querholmoberseiten befestigt, stellt der schräge Bereich der Metallplatte im Wesentlichen eine Verlängerung der abgeschrägten Querholmendbereiche dar, wodurch der Sitzbankrahmen noch weiter über die Radkästen oder anderen Fahrzeugeinbauten hinausragen kann.

Um ein komfortables Sitzen auch für drei Personen zu ermöglichen kann beispielsweise vorgesehen sein, dass eine für eine Polsterung nutzbare Fläche mindestens 1,35m, vorzugsweise 1,40m breit ist. Es ist aber auch möglich, auf schmaleren Sitzbänken beispielsweise Notsitzplätze vorzusehen, so dass mindestens drei Personen sicher auf der Sitzbank transportiert werden können. Um eine möglichst breite polsterbare Sitzbankrahmenfläche bereitzustellen, ist in diesem Fall die Verwendung des erfindungsgemäßen Sitzbankrahmens bestehend aus Querholmen und Metallplatten besonders vorteilhaft.

Um den Sitzbankrahmen zusätzlich zu stabilisieren ist erfindungsgemäß vorgesehen, dass die Querholme durch Längsholme in einem Abstand zu dem Querholmendbereich miteinander verbunden sind. An solchen zusätzlichen Längsholmen sind auch Kufen angebracht, mit denen die Sitzbank mit dem Fahrzeugboden verbunden werden kann. Zudem ist es möglich, die Längsholme verschiebbar an den Querholmen anzubringen, um die Anordnung der Kufen an die durch den Fahrzeugboden vorgegebenen Arretierungsmöglichkeiten anzupassen.

Die Stabilität des Sitzbankrahmens kann insbesondere auch dadurch gewährleistet werden, dass die Metallplatte eine Dicke zwischen 3mm und 5mm aufweist. Um die Herstellungskosten weiter zu reduzieren ist es aber auch denkbar, dass die Metallplatte eine geringere Dicke als 3mm, beispielsweise 2mm aufweist. Die Stabilität kann weiter erhöht werden, in dem eine Metallplatte mit einer größeren Dicke als 5mm eingesetzt wird.

Vorteilhafterweise ist weiter vorgesehen, dass die Rückenlehne an der Metallplatte befestigbar ist. Auf diese Weise kann auf einen zusätzlichen Rückenlehnentragrahmen verzichtet werden, wodurch der Herstellungsaufwand weiter reduziert wird.

Um den Innenraum des Fahrzeugs möglichst flexibel an verschiedene Anforderungen anpassen zu können ist weiter vorgesehen, dass die Rückenlehne an der Metallplatte drehbar gelagert ist. Auf diese Weise kann die Rückenlehne beispielswiese umgeklappt werden, um zusätzlichen Stauraum zu gewinnen.

Um die Rückenlehne umlegen zu können ist vorgesehen, dass eine Befestigung der Rückenlehne mit der Metallplatte lösbar ist. Auf diese Weise kann auch eine einfache Montage und Demontage der gesamten Sitzbank ermöglicht werden, da die Rückenlehne und der gepolsterte Sitzbankrahmen getrennt voneinander aus dem Fahrzeug entfernt werden können. Nachfolgend werden Ausführungsbeispiele der Erfindung näher erläutert, welche in der Zeichnung dargestellt ist. Es zeigt:
Figur 1 eine schematische Darstellung einer Frontansicht einer in ein Fahrzeug eingebauten Sitzbank,
Figur 2a eine vergrößerte Darstellung einer in Figur 1 dargestellten Metallplatte,
Figur 2b eine alternative Ausgestaltung der in Fig. 2a dargestellten Anordnung,
Figur 3 eine Draufsicht auf einen schematisch dargestellten Sitzbankrahmen.

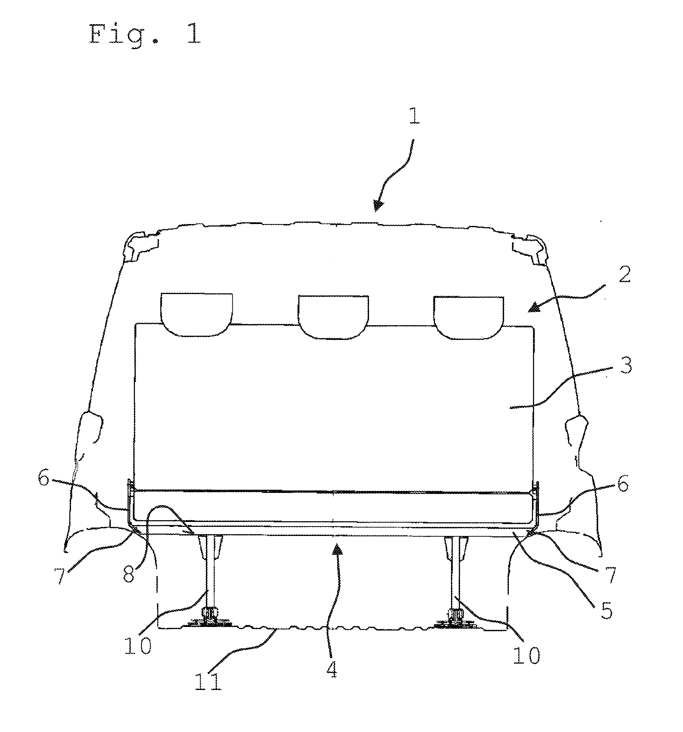

Figur 1 zeigt eine in ein Fahrzeug 1 eingebaute Sitzbank 2. Die Sitzbank 2 besitzt eine Rückenlehne 3 und einen gepolsterten Sitzbankrahmen 4. Die Querholme 5 sind seitlich mit Metallplatten 6 verbunden. Die Querholme 5 und die Metallplatten 6 bilden den Sitzbankrahmen 4. Die Querholmendbereiche 7 sind abgeschrägt und die ebenfalls bereichsweise abgeschrägten Metallplatten 6 sind an der Querholmunterseite 8 befestigt, wobei die schrägen Bereiche der Metallplatten 6 mit den abgeschrägten
Querholmendbereichen 7 in Anschlag gebracht sind. Auf diese Weise kann der polsterbare Sitzbankrahmen 4 einige Zentimeter über die Radkästen 9 hinausragen. Dadurch wird die Sitzfläche vergrößert und ein komfortables Sitzen auch für drei Personen ermöglicht. Die Sitzbank 2 ist über Kufen 10 mit dem Fahrzeugboden 11 verbunden. Die Kufen 10 sind an nicht dargestellten Längsholmen befestigt, die mit den Querholmen 5 verbunden sind und den Sitzbankrahmen 4 zusätzlich stabilisieren. In diesem Ausführungsbeispiel ist außerdem vorgesehen, dass die Längsholme zusammen mit den Kufen 10 entlang der Querholme 5 verschoben werden können, um die Position der Kufen 10 an die durch den Fahrzeugboden 11 vorgegebenen nicht dargestellten Arretierungsmöglichkeiten anzupassen.

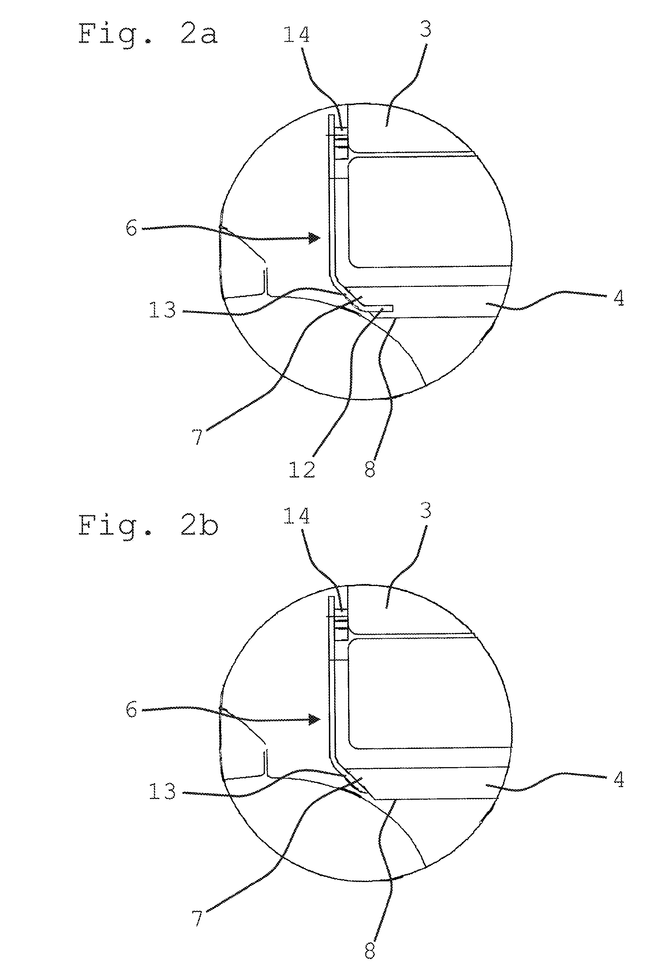

In Figur 2a ist eine der in Figur 1 gezeigten Metallplatten 6 vergrößert dargestellt. Der waagerechte Teil 12 der Metallplatte 6 ist innerhalb des Querholmendbereichs 7 mit der Querholmunterseite 8 verbunden. Zu diesem Zweck sind in der Metallplatte 6 nicht dargestellte Aufnahmeschlitze vorgesehen, in die der Querholmendbereich 7 eingesetzt wird. Zusätzlich ist der schräge Bereich 13 der Metallplatte 6 an dem abgeschrägten Querholmendbereich 7 befestigt. Der schräge Bereich 13 der Metallplatte 6 ragt über den Radkasten 9. Auf diese Weise wird die Breite des Sitzbankrahmens 4, der aus den Querholmen 5 und den Metallplatten 6 gebildet wird, verlängert. In der Figur sind außerdem die lösbaren Befestigungselemente 14 dargestellt, mit denen die Rückenlehne 3 an der Metallplatte 6 befestigt wird.

Figur 2b zeigt eine alternative Ausgestaltung der Verbindung der Querholme 5 mit Metallplatten 6. An den Metallplatten 6 sind nicht dargestellte Metallplattenzungen ausgeführt, die in die Querholme 5 eingreifen und dort befestigt werden. Alternativ ist es möglich, seitlich in den Querholmendbereichen 7 Schlitze vorzusehen, in die die Metallplatten 6 eingeschoben werden können.

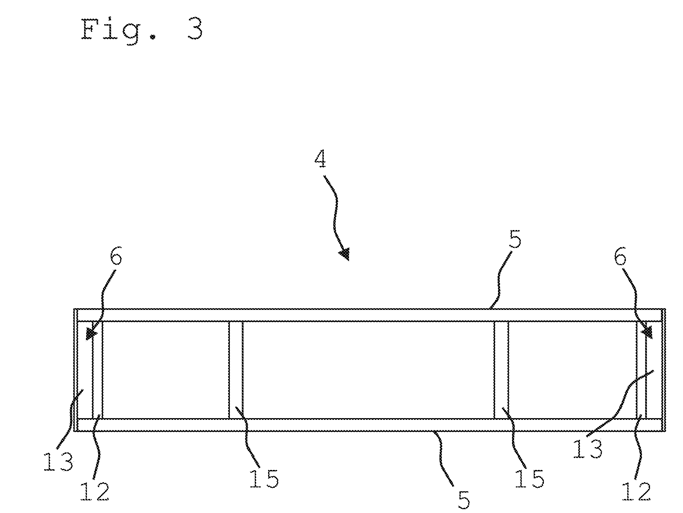

Figur 3 zeigt eine Draufsicht auf einen schematisch dargestellten Sitzbankrahmen 4. Die Querholme 5 sind mit dreifach abgekanteten Metallplatten 6 verbunden. Der waagerechte Teil 12 der Metallplatte 6 ist mit der Querholmunterseite 8 verbunden. Zusätzlich ist der schräge Bereich 13 der Metallplatte 6 an dem abgeschrägten Querholmendbereich 7 befestigt. Der Sitzbankrahmen 4 wird zusätzlich durch Längsholme 15 stabilisiert. An diese Längsholme sind die nicht dargestellten Kufen befestigt.

## Patentansprüche

1. Sitzbank (2) für Fahrzeuge, insbesondere für Wohnmobile, mit einer Sitzfläche und einer Rückenlehne (3), wobei die Sitzbank (2) einen Sitzbankrahmen (4) aufweist, an dem die Rückenlehne (3) befestigbar ist, wobei der Sitzbankrahmen (4) mindestens zwei im Wesentlichen parallel angeordnete Querholme (5) aufweist, wobei, die Querholme (5) auf mindestens einer Sitzbankseite in einem Querholmendbereich (7) durch eine Metallplatte (6) miteinander verbunden sind, **dadurch gekennzeichnet, dass** die Querholme (5) durch Längsholme (15) in einem Abstand zu den jeweils einander gegenüberliegenden Querholmendbereichen (7) der jeweiligen Querholme (5) miteinander verbunden sind , wobei Kufen (10) an den Längsholmen (15) befestigt sind.

2. Sitzbank nach Anspruch 1, **dadurch gekennzeichnet, dass** die Metallplatte (6) mindestens einmal in Längsrichtung abgekantet ist.

3. Sitzbank nach Anspruch 1 oder Anspruch 2, **dadurch gekennzeichnet, dass** die Metallplatte (6) zwischen einem waagerecht angeordneten Bereich (12) und einem senkrecht angeordneten Bereich (13) schräg verläuft.

4. Sitzbank nach einem der voranstehenden Ansprüche, **dadurch gekennzeichnet, dass** der Querholmendbereich (7) abgeschrägt ist.

5. Sitzbank nach einem der voranstehenden Ansprüche, **dadurch gekennzeichnet, dass** die Metallplatte (6) eine Dicke zwischen 3mm und 5mm aufweist.

6. Sitzbank nach einem der voranstehenden Ansprüche, **dadurch gekennzeichnet, dass** die Rückenlehne (3) an der Metallplatte (6) befestigbar ist.

7. Sitzbank nach einem der voranstehenden Ansprüche, **dadurch gekennzeichnet, dass** die Rückenlehne (3) an der Metallplatte (6) drehbar gelagert ist.

8. Sitzbank nach einem der voranstehenden Ansprüche, **dadurch gekennzeichnet, dass** eine Befestigung der Rückenlehne (3) mit der Metallplatte (6) lösbar ist.

## Claims

1. Seat bench (2) for vehicles, in particular for caravans, with a seat surface and a backrest (3), wherein the seat bench (2) comprises a seat bench frame (4) on which the backrest (3) can be fixed, wherein the seat bench frame (4) comprises at least two transverse arbors (5) arranged substantially parallel, wherein the transverse arbors (5) are connected by a metal plate (6) on at least one side of the seat bench in an end area (7) of the transverse arbors, **characterized in that** the transverse arbors (5) are connected at a distance to the in each case opposing end areas of the transverse arbors (7) of the transverse arbors (5) by longitudinal arbors (15), wherein runners (10) are fixed at the longitudinal arbors (15).

2. Seat bench according to claim 1, **characterized in that** the metal plate (6) is chamfered at least once in longitudinal direction.

3. Seat bench according to claim 1 or claim 2, **characterized in that** the metal plate (6) runs inclined between a horizontally-arranged area (12) and a vertically-arranged area (13).

4. Seat bench according to one of the preceding claims, **characterized in that** the end area (7) of the transverse arbors is inclined.

5. Seat bench according to one of the preceding claims, **characterized in that** the metal plate (6) has a thickness between 3 mm and 5 mm.

6. Seat bench according to one of the preceding claims, **characterized in that** the backrest (3) can be fixed to the metal plate (6).

7. Seat bench according to one of the preceding claims, **characterized in that** the backrest (3) is rotatably supported on the metal plate (6).

8. Seat bench according to one of the preceding claims, **characterized in that** an attachment between the backrest (3) and the metal plate (6) can be released.

## Revendications

1. Banquette (2) pour véhicules, notamment pour autocaravanes, avec une surface de siège et un dossier (3), la banquette (2) présentant un cadre de banquette (4), sur lequel le dossier (3) est fixable, le cadre de banquette (4) présentant au moins deux longerons transversaux (5) disposés pour l'essentiel en parallèle, les longerons transversaux (5) étant reliés l'un avec l'autre sur au moins un côté de banquette dans une zone terminale de longeron transversal (7) par une plaque métallique (6), **caractérisée en ce que** les longerons transversaux (5) sont reliés l'un avec l'autre par des longerons longitudinaux (15) dans un écart aux zones terminales de longeron transversal (7) situées respectivement face l'une à l'autre des longerons transversaux respectifs (5), et des patins (10) étant fixés sur les longerons longitudinaux (15).

2. Banquette selon la revendication 1, **caractérisée en ce que** la plaque métallique (6) est chanfreinée au moins une fois dans la direction longitudinale.

3. Banquette selon la revendication 1 ou la revendication 2, **caractérisée en ce que** la plaque métallique (6) s'étend en biais entre une zone disposée horizontalement (12) et une zone disposée verticalement (13).

4. Banquette selon une quelconque des revendications précédentes, **caractérisée en ce que** la zone terminale de longeron transversal (7) est inclinée.

5. Banquette selon une quelconque des revendications précédentes, **caractérisée en ce que** la plaque métallique présente une épaisseur entre 3 mm et 5 mm.

6. Banquette selon une quelconque des revendications précédentes, **caractérisée en ce que** le dossier (3) est fixable sur la plaque métallique (6).

7. Banquette selon une quelconque des revendications précédentes, **caractérisée en ce que** le dossier (3) est monté sur la plaque métallique (6) de manière rotatif.

8. Banquette selon une quelconque des revendications précédentes, **caractérisée en ce qu'**une fixation du dossier (3) avec la plaque métallique (6) est détachable.
